# EUROPÄISCHE PATENTANMELDUNG

(11) **EP 3 205 384 A1**
(43) Veröffentlichungstag der Anmeldung: **16.08.2017**
(21) Anmeldenummer: 16155680.8
(22) Anmeldetag: 15.02.2016
(51) Int. Cl.: B01D 3/06, B01D 3/10, B01D 5/00, F04C 19/00

(54) **VERFAHREN ZUR VAKUUMDESTILLATION EINER ORGANISCHEN VERBINDUNG**

(71) Anmelder: Evonik Degussa GmbH, 45128 Essen (DE)
(72) Erfinder: THEISSEN, Ferdinand, 53332 Bornheim (DE); ZARFL, Theo, 50374 Erftstadt (DE)

(57) **Zusammenfassung**

Die vorliegende Erfindung betrifft ein Verfahren zur Vakuumdestillation mindestens einer organischen Verbindung mittels einer eine Absorptionsflüssigkeit enthaltenden Vakuumeinrichtung (8), wobei die Absorptionsflüssigkeit von der zu destillierenden organischen Flüssigkeit verschieden ist und mit ihr eine Additionsverbindung bildet und/oder die Absorptionsflüssigkeit mit der zu destillierenden organischen Verbindung identisch ist, sowie die Verwendung von Verbindungen der allgemeinen Formel (I) R¹-CHO als Schmiermittel in Flüssigkeitsringpumpen und Flüssigkeitsringpumpen, die erfindungsgemäße Absorptionsflüssigkeiten als Ringflüssigkeit enthalten oder aus ihr bestehen.

## Beschreibung

Die vorliegende Erfindung betrifft ein Verfahren zur Vakuumdestillation mindestens einer organischen Verbindung mittels einer eine Absorptionsflüssigkeit enthaltenden Vakuumeinrichtung, wobei die Absorptionsflüssigkeit mit der zu destillierenden Verbindung nicht identisch ist und mit ihr eine Additionsverbindung bildet und/oder die Absorptionsflüssigkeit mit der zu destillierenden Verbindung identisch ist. Ferner betrifft die vorliegende Erfindung auch die Verwendung einer speziellen Absorptionsflüssigkeit als Schmiermittel in einer Flüssigkeitsringpumpe und eine Flüssigkeitsringpumpe enthaltend eine spezielle Absorptionsflüssigkeit.

Zum Abpumpen von Gasen oder zur Destillation von Verbindungen werden im industriellen Maßstab eine Reihe unterschiedlicher Pumpen eingesetzt. Je nach ihrem physikalischen Wirkungsprinzip werden Pumpen zur Erzeugung von Vakuum in gasbindende Vakuumpumpen und in Gastransferpumpen unterteilt. Gastransferpumpen erzielen Vakuumdrücke von bis zu kleiner als 10⁻³ bar, was für die meisten großtechnischen Anwendungen in der chemischen Industrie, insbesondere die Vakuumdestillation, vollkommen ausreichend ist. Daher werden für großtechnische Anwendungen in der chemischen Industrie in der Regel nur Gastransferpumpen eingesetzt. Hinsichtlich ihrer Bauart werden Gastransferpumpen in Verdrängerpumpen und Treibmittelpumpen bzw. Strahlpumpen unterteilt.

Gemeinsames Kennzeichen aller Verdrängerpumpen ist ein gekapselter (abgeschlossener) Arbeitsraum, dessen Größe sich während des Arbeitsspiels zyklisch ändert. Das Arbeitsspiel einer Verdrängervakuumpumpe lässt sich unterteilen in die vier Arbeitsspielphasen: Ansaugen, Transportieren (Verdichten), Ausschieben und Druckwechsel. Die Ansaug- und Ausschiebephase wird dabei auch als niederdruckseitiger bzw. hochdruckseitiger Ladungswechsel bezeichnet. Bei Verdrängerpumpen tritt das im Rezipienten enthaltene Gas in einen durch Kolben, Rotoren oder Schieber gebildeten Arbeitsraum ein, der Arbeitsraum wird geschlossen, das Gas wird eventuell verdichtet und dann ausgestoßen. Die mechanischen Elemente innerhalb nasslaufender Pumpen sind gegeneinander durch eine Flüssigkeit abgedichtet.

Eine Flüssigkeitsringpumpe besteht aus einem zylindrischen Gehäuse und einem darin exzentrisch angeordneten, sternförmigen Flügelrad bzw. Laufrad. Über einen auf der Stirnsite des Gehäuses nicht zentrisch angeordneten Ansatzstutzen ist die Flüssigkeitsringpumpe mit einem Raum verbunden, aus dem ein Saugmedium abgesaugt werden soll. In dem Gehäuse der Flüssigkeitsringpumpe befindet sich ein flüssiges Arbeitsmedium, im einfachsten Fall Wasser, das bei der Rotation des Flügelrads oder des Gehäuses einen zum Gehäuse konzentrisch angeordneten Flüssigkeitsring ausbildet, der die von zwei Flügeln des Flügelrads ausgebildeten Flügelradkammern abdichtet. Auf Grund der exzentrischen Anordnung des Flügelrads tauchen während der Rotation die Flügel des Flügelrads unterschiedlich tief in den Flüssigkeitsring ein. Dadurch bilden die Flügel des Flügelrads Kammern unterschiedlicher Größe aus, die auch als Flügelradkammern bezeichnet werden. Die in einer Flügelradkammer befindliche Gasphase wird verdichtet, wenn die eine Flügelradkammer ausbildenden Flügel tiefer in den Flüssigkeitsring eintauchen. Auf Grund der Exzentrizität des Flügelrads befindet sich eine Flügelradkammer mit verdichteter Gasphase immer gegenüber einer Flügelradkammer deren Flügel weniger tief in die Ringflüssigkeit eintauchen, was zu einer Vergrößerung des Gasvolumens in dieser Flügelradkammer führt. Durch den Ansatzstutzen wird das Saugmedium in die dem Ansatzstutzen benachbarte Flügelradkammer eingesogen. Bei Rotation wirkt daher die von Ringflüssigkeit und Flügelrad gebildete Einheit wie ein Kolben, dessen Segmente abwechselnd verdichten und saugen.

Unter den Bezeichnungen Strahlpumpe bzw. Treibmittelpumpen werden Pumpen verstanden, bei denen die Pumpwirkung durch einen Fluidstrahl, typischerweise einen Flüssigkeitsstrahl, erzeugt wird. Hierbei stellt das eingesetzte Fluid das sogenannte Treibmedium bzw. Arbeitsmedium dar. Durch Impulsaustausch mit dem Fluidstrahl wird ein anderes Medium, das sogenannte Saugmedium, angesaugt, beschleunigt und verdichtet bzw. gefördert, sofern es unter ausreichendem Druck steht. Die Förderung des Saugmediums erfolgt in den folgenden Schritten: Das Treibmedium tritt mit möglichst hoher Geschwindigkeit aus einer engen Treibdüse in eine deutlich größere Mischkammer hinüber. Bei diesem Übertritt entsteht nach dem Gesetz von Bernoulli ein dynamischer Druckabfall. Daher ist der Druck in der Strömung geringer als der Normaldruck. In der Mischkammer trifft der Treibstrahl auf das in der Mischkammer anwesende Saugmedium, das meist unter Normaldruck steht. Nach Austritt aus der Düse verhält sich der Treibstrahl zunächst wie ein Freistrahl: Durch innere Reibung und Turbulenzen entsteht eine Scherspannung in der Grenzschicht zwischen dem schnellen Treibmedium und dem wesentlich langsameren Saugmedium. Diese Spannung bewirkt eine Impulsübertragung, welche dazu führt, dass das Saugmedium beschleunigt und mitgerissen wird. Durch die Aufweitung des Treibstrahls und durch die Ansaugung des Saugmediums wird der Strahl abgebremst, d.h. dynamischer Druck wird in statischen Druck umgewandelt. Da das Saugmedium in der Mischkammer beschleunigt wird, entsteht nach dem Gesetz von Bernoulli auch für das Saugmedium ein Druckabfall, d.h. eine Saugwirkung, die weiteres Saugmedium aus einem über einen Saugstutzen benachbarten Raum nachfördert, sofern dort ein ausreichend hoher Mindestdruck herrscht.

Ein genereller Nachteil von Verdrängerpumpen und insbesondere von Strahlpumpen besteht darin, dass das Arbeitsmedium bzw. das Treibmedium immer in Kontakt mit dem Saugmedium kommt. Beim Absaugen eines Mediums mittels dieser Pumpentypen ist es daher unvermeidbar, dass das Arbeitsmedium bzw. Treibmedium durch das Saugmedium verunreinigt wird bzw. das Saugmedium verunreinigt durch das Arbeitsmedium bzw. Treibmedium die Pumpe verlässt. Handelt es sich bei dem Saugmedium um eine Verbindung mit Wertstoffpotential, stellt die Verunreinigung mit dem Arbeitsmedium bzw. Treibmedium ein erhebliches Problem dar. Denn für eine Rückintegration bzw. eine Zuführung in andere Verwendungen muss die abgesaugte Verbindung wieder in Reinform aus dem Arbeitsmedium bzw. dem Treibmedium freigesetzt werden. In der Praxis ist dies, wenn überhaupt, nur mit entsprechendem Aufwand möglich, beispielsweise durch eine zusätzliche Destillation, wie im US-Patent 4,282,013 beschrieben.

Das US-Patent 4,282,013 beschreibt eine Destillation von Roh-Maleinsäureanhydrid mittels einer Flüssigkeitsringpumpe deren Ringflüssigkeit von einem Absorptionsmittel für Maleinsäureanhydrid ausgebildet wird, gefolgt von einer weiteren Destillation bei der das leichter siedende Maleinsäureanhydrid von dem höher siedenden Absorptionsmittel abgetrennt wird. Diese Technik ist allerdings nur auf solche Verbindungen anwendbar, die einen relativ niedrigen Siedepunkt haben, wie beispielsweise das eingesetzte Maleinsäureanhydrid mit einem Siedepunkt von 53°C, und zudem sowohl thermodynamisch als auch kinetisch stabil sind. Darüber hinaus ist die destillative Rückgewinnung des Maleinsäureanhydrids mit erheblichen zusätzlichen Investitions- und Energiekosten verbunden. Daher ist das Verfahren gemäß der technischen Lehre der US 4,282,013 nicht attraktiv für industrielle Anwendungen.

Die Verunreinigung des Arbeitsmediums bzw. des Treibmediums mit dem abgesaugten Saugmedium stellt insbesondere dann ein großes Problem dar, wenn es sich bei dem Saugmedium um eine schwefelhaltige Verbindung handelt. Denn dann muss das verunreinigte Arbeits- bzw. Treibmedium aufwendig entsorgt werden, beispielweise durch eine Verbrennung. Ein zusätzlicher Nachteil bei der Verbrennung von schwefelhaltigen Verbindungen besteht jedoch darin, dass das Abgas zur Vermeidung von Schwefeldioxid-Emissionen entschwefelt werden muss. Dies ist generell mit hohen Investitions- und Betriebskosten verbunden.

Der vorliegenden Erfindung lag daher die Aufgabe zugrunde, ein Verfahren zur Vakuumdestillation von organischen Verbindungen bereitzustellen, das eine vollständige Rückintegration der abdestillierten Verbindung unter Vermeidung der Entstehung von Abwässern und unter zumindest deutlicher Reduzierung von Gasemissionen und ohne eine aufwendige Entschwefelung ermöglicht.

Erfindungsgemäß wird diese Aufgabe dadurch gelöst, indem die Vakuumdestillation mittels einer Vakuumeinrichtung durchgeführt wird, die eine Absorptionsflüssigkeit enthält, die eine physikalische oder eine chemische Absorption einer zu destillierenden organischen Verbindung oder gleichzeitig eine physikalische und eine chemische Absorption von zu destillierenden organischen Flüssigkeiten erlaubt.

Eine physikalische Absorption der zu destillierenden Verbindung wird erfindungsgemäß dadurch erreicht, dass die Vakuumeinrichtung eine Absorptionsflüssigkeit enthält, die mit einer zu destillierenden organischen Verbindung identisch ist, so dass die zu destillierende Verbindung in der von der Absorptionsflüssigkeit ausgebildeten Phase im Wesentlichen vollständig aufgenommen wird. Wenn die zu destillierende organische Verbindung nicht mit der Absorptionsflüssigkeit identisch ist, wird eine chemische Absorption der zu destillierenden Flüssigkeit dadurch erreicht, indem die Absorptionsflüssigkeit mit der zu destillierenden organischen Verbindung eine Additionsverbindung ausbildet. Befinden sich in der abgesaugten Gasphase unterschiedliche Verbindungen, wird die Absorptionsflüssigkeit so gewählt, dass sie von einer der zu destillierenden organischen Verbindung verschieden ist und mit dieser eine Additionsverbindung bildet, während sie mit der anderen zu destillierenden organischen Verbindung identisch ist und mit dieser eine gemeinsame Phase ausbildet.

Gegenstand der vorliegenden Erfindung ist daher ein Verfahren zur Vakuumdestillation mindestens einer organischen Verbindung mittels einer eine Absorptionsflüssigkeit enthaltenden Vakuumeinrichtung, wobei die Absorptionsflüssigkeit von der zu destillierenden organischen Verbindung verschieden ist und mit ihr eine Additionsverbindung bildet und/oder die Absorptionsflüssigkeit mit der zu destillierenden organischen Verbindung identisch ist.

Im Rahmen der vorliegenden Erfindung wird der Begriff Additionsverbindung bzw. Addukt so verwendet, dass er alle zusammengesetzten Moleküle bezeichnet, die durch Addition zweier Verbindungen unter Ausbildung einer kovalenten Bindung, gegebenenfalls unter gleichzeitiger Abspaltung von Wasser gebildet werden. Beispiele für Additionsverbindungen im Rahmen der vorliegenden Erfindung sind die Produkte aus einer Michael-Addition, wie vorzugsweise das aus Acrolein und Methylmercaptan gebildete Michael-Addukt 3-Methylthiopropionaldehyd, die aus Alkoholen und Carbonylverbindungen gebildeten Halbacetale und die entsprechenden aus Thiolen bzw. Mercaptanen und Carbonylverbindungen gebildeten Hemithioacetale bzw. Halbmercaptale, wie vorzugsweise das aus 3-Methylthiopropionaldehyd und Methylmercaptan gebildete 1,3-Bis(methylthio)propan-1-ol.

Der Begriff Vakuumeinrichtung wird im Rahmen der vorliegenden Erfindung so verwendet, dass er sämtliche Pumpen bezeichnet mit denen ein verminderter Druck für eine Vakuumdestillation erzeugt werden kann, einschließlich gegebenenfalls erforderlicher zusätzlicher Vorrichtungen zur chemischen und/oder physikalischen Absorption von destillierten organischen Verbindungen.

Technisch gesehen sind Vakuumpumpen genau genommen keine Pumpen, sondern Verdichter. Deshalb stellen sie eine Kondensationsstufe für die abdestillierte Verbindung dar. Dies führt, wenn die Absorptionsflüssigkeit in der Vakuumeinrichung mit der abdestillierten Verbindung identisch ist, zu einer Aufkonzentration der betreffenden Verbindung. Ist die abdestillierte Verbindung von der Absorptionsflüssigkeit verschieden, bildet sie mit der Absorptionsflüssigkeit ein Addukt. Dieses Addukt kann selber ein Wertstoffprodukt darstellen, welches entweder in den vorgelagerten Prozess zurückgeführt oder einem anderen Prozess zugeführt werden kann. Das erfindungsgemäße Verfahren ist jedoch nicht darauf beschränkt, nur einzelne Verbindungen mittels des durch die Vakuumeinrichtung erzeugten Vakuums abzusaugen und zu absorbieren. Vielmehr ist das erfindungsgemäße Verfahren auch auf Fälle anwendbar, in denen nicht nur mehr als eine Verbindung abdestilliert sondern auch absorbiert wird, wobei eine Verbindung mit der Absorptionsflüssigkeit identisch ist und eine andere Verbindung von der Absorptionsflüssigkeit verschieden ist und mit dieser ein Addukt bildet.

Für sämtliche dieser Fälle sind Aldehyde als Absorptionsflüssigkeiten geeignet. Aldehyde, und insbesondere solche deren 1 bis 12 Kohlenstoffatome enthaltenden Alkyl-, Alkenyl- oder Alkinylgruppen entweder unsubstituiert oder mit einer H₃C-O- oder einer H₃C-S-Gruppe substituiert sind, weisen vergleichsweise niedrige Schmelzpunkte und vergleichsweise hohe Siedepunkte auf. Über einen weiten Temperaturbereich sind Aldehyde daher als Absorptionsflüssigkeiten in der Vakuumdestillation einsetzbar. Eine zusätzliche Kühlung der Absorptionsflüssigkeit ist daher in der Regel nicht erforderlich, kann jedoch zusätzlich durchgeführt werden zur Verminderung der Freisetzung einer abdestillierten organischen Verbindung, die in der Absorptionsflüssigkeit bereits physikalisch absorbiert worden ist, und zur Reduzierung der thermischen Belastung für das Absorptionsmittel. Bei Identität des als Absorptionsflüssigkeit eingesetzten Aldehyds mit einer zu destillierenden organischen Verbindung wird daher die abdestillierte organische Verbindung in der von dem betreffenden Aldehyd ausgebildeten Phase absorbiert. Wenn die zu destillierende organische Verbindung ein Alkohol und/oder ein Mercaptan ist, bildet der als Absorptionsflüssigkeit eingesetzte Aldehyd mit der zu destillierenden organischen Verbindung eine Additionsverbindung.

In einer Ausführungsform des erfindungsgemäßen Verfahrens entspricht die Absorptionsflüssigkeit daher der allgemeinen Formel (I) R¹-CHO, wobei R¹ eine unsubstituierte oder eine mit einer H₃C-O- oder H₃C-S-Gruppe substituierte Alkyl-, Alkenyl- oder Alkinylgruppe mit 1 bis 12 Kohlenstoffatomen bedeutet.

Ein Problem beim Einsatz von Flüssigkeitsringpumpen in der Vakuumdestillation ist das Auftreten von Kavitationen, insbesondere wenn die Flüssigkeitsringpumpe in der Nähe des Dampfdrucks der Ringflüssigkeit betrieben wird. Verdampft die Ringflüssigkeit, so entstehen während dieses Vorgangs Blasen in der Flüssigkeit, die auch als Kavitationsblasen bezeichnet werden. Denn die verdampfte Ringflüssigkeit benötigt einen vielfach größeren Raum als die Ringflüssigkeit im flüssigen Zustand. Sofern der Druck in der Ringflüssigkeit wieder ansteigt, endet der Verdampfungsvorgang. Der in der Kavitationsblase entstandene Dampf der Ringflüssigkeit kondensiert dann an der Außenwand der Dampfblase, und die bereits gebildeten Dampfblasen fallen daraufhin in kürzester Zeit wieder in sich zusammen. Der vorher von der Dampfphase benötigte Raum wird schlagartig kleiner, und die Ringflüssigkeit strömt implosionsartig in den freiwerdenden Raum zurück. Dadurch entstehen in der Ringflüssigkeit Druckstöße, die zwar nur kurzfristig andauern dafür jedoch eine Stärke in der Größenordnung von mehreren 100 MPa aufweisen können. Bei diesem Vorgang entstehen daher Druckwellen mit sehr hohen Druckspitzen. Befinden sich implodierende Dampfblasen in der Nähe oder direkt an einer festen Wand, zum Beispiel den Laufradflügeln der Flüssigkeitsringpumpe, so entsteht bei der Implosion ein Flüssigkeitsstrahl, ein sogenannter Mikrojet, der mit (sehr) hoher Geschwindigkeit auf die Wand bzw. die Laufradflügel auftrifft. Dies führt sowohl zu einem teils erheblich Materialverschleiß als auch zu einer intensiven Schallemission. Die plötzliche Druckbelastung für das Material von Wand und Laufradflügel ist so hoch, dass das Auftreten von Kavitationen zu kraterförmigen Materialabtragungen führt. Der von der Flüssigkeitsringpumpe erzeugte verminderte Druck bewirkt eine Erniedrigung des Dampfdrucks der Ringflüssigkeit im Inneren der Flüssigkeitsringpumpe. Beim Betrieb einer Flüssigkeitsringpumpe verdampft die eingesetzte Ringflüssigkeit daher bereits bei einer niedrigeren Temperatur als beim Normaldruck von 1.013 mbar. Dies begünstigt das Auftreten von Kavitationen in der Flüssigkeitsringpumpe.

Erfindungsgemäß wird diese Problematik dadurch gelöst, indem als Absorptionsflüssigkeit ein Aldehyd zum Einsatz kommt, dessen 1 bis 12 Kohlenstoffatome umfassende Alkyl-, Alkenyl- oder Alkinylgruppe mit einer H₃C-O- oder einer H₃C-S-Gruppe substituiert ist. Durch die zusätzliche H₃C-O- oder H₃C-S-Gruppe wird der Siedepunkt des Aldehyds erhöht, wodurch das Auftreten von Kavitationen vermieden oder zumindest anteilig verringert wird. Zudem werden durch die zusätzliche H₃C-O- bzw. H₃C-S-Gruppe die lösenden Eigenschaften des Aldehyds erhöht, was außerdem zur Vermeidung oder zumindest Verringerung des Auftretens von Feststoffablagerungen, welche die Bildung von Kavitationen begünstigen können, beiträgt.

In einer Ausführungsform des erfindungsgemäßen Verfahrens entspricht die Absorptionsflüssigkeit daher der allgemeinen Formel (I) R¹-CHO, wobei R¹ eine mit einer H₃C-O- oder H₃C-S-Gruppe substituierte Alkyl-, Alkenyl- oder Alkinylgruppe mit 1 bis 12 Kohlenstoffatomen bedeutet.

Vorzugsweise weist der Rest R¹ des Aldehyds gemäß der allgemeinen Formel (I) 1 bis 6 Kohlenstoffatome auf, weiter bevorzugt enthält der Rest R¹ des Aldehyds 2 bis 4 Kohlenstoffatome. Ferner sind lineare Alkyl-, Alkenyl- bzw. Alkinylgruppen gegenüber verzweigten bevorzugt. Besonders bevorzugt ist der Rest R¹ daher eine lineare Alkyl-, Alkenyl- oder Alkinylgruppe mit 1 bis 6 Kohlenstoffatomen, insbesondere mit 2 bis 4 Kohlenstoffatomen, die mit einer H₃C-O- oder einer H₃C-S-Gruppe substituiert ist.

Bevorzugt ist der Vakuumeinrichtung im erfindungsgemäßen Verfahren ein Phasenabscheider nachgeschaltet, um die nicht in der Absorptionsflüssigkeit absorbierten Verbindungen von der Absorptionsflüssigkeit und/oder von der aus der destillierten organischen Verbindung und der Absorptionsflüssigkeit gebildeten Additionsverbindung abzutrennen. Im Rahmen der vorliegenden Erfindung ist die Verwendung von 3-Methylthiopropionaldehyd als Absorptionsflüssigkeit besonders vorteilhaft. Denn die Siedetemperatur von 3-Methylthiopropionaldehyd beträgt bei Normaldruck 165°C und liegt somit deutlich über der Siedetemperatur von Wasser, das typischerweise als Ringflüssigkeit in Flüssigkeitsringpumpen und als Saugmedium in Strahlpumpen verwendet wird. Durch die Verwendung von 3-Methylthiopropionaldehyd oder höheren Homologen als Absorptionsflüssigkeit wird daher ein Übergang der Absorptionsflüssigkeit in die Gasphase vermieden.

In einer weiteren Ausführungsform des erfindungsgemäßen Verfahrens ist die Absorptionsflüssigkeit daher 3-Methylthiopropionaldehyd oder ein höheres Homologe davon.

Im Rahmen der vorliegenden Erfindung wird unter einem höheren Homologen von 3-Methylthiopropionaldehyd eine diesem Aldehyd strukturell ähnliche Verbindung verstanden, die sich nur durch eine zusätzliche CH₂-Einheit in der Alkylgruppe von dem 3-Methylthiopropionaldehyd unterscheidet.

Das höhere Homologe von 3-Methylthiopropionaldehyd hat eine Alkylgruppe mit 3 bis 12 Kohlenstoffatomen, bevorzugt mit 3 bis 6 Kohlenstoffatomen, insbesondere mit 3 oder 4 Kohlenstoffatomen.

Das erfindungsgemäße Verfahren dient zur Vakuumdestillation mindestens einer organischen Verbindung. Daher kann sowohl eine einzige Verbindung als auch zwei oder mehr Verbindungen der Vakuumdestillation unterworfen werden. Im einfachsten Fall handelt es sich um nur eine einzige zu destillierende organische Verbindung, die zudem mit der Absorptionsflüssigkeit identisch ist. Dies hat den großen Vorteil, dass eine im Idealfall vollständig aus der Absorptionsflüssigkeit bestehende Flüssigkeit oder zumindest eine im Wesentlichen die Absorptionsflüssigkeit enthaltende Flüssigkeit die Vakuumeinrichtung verlässt. Dadurch wird eine anschließende Abtrennung von gegebenenfalls anwesenden leichtsiedenden Verunreinigungen von der Absorptionsflüssigkeit bedeutend einfacher als bei einem komplexen Mehrkomponentengemisch. Im Idealfall ist jedoch keine weitere Aufreinigung der Absorptionsflüssigkeit erforderlich. Bei zwei oder mehr organischen Verbindung, die destilliert werden, ist es ebenfalls von Vorteil, wenn eine der zu destillierenden organischen Verbindungen mit der Absorptionsflüssigkeit identisch ist. Denn auch in diesen Fällen verringert sich die Anzahl der voneinander zu trennenden Verbindungen um eine Komponente gegenüber den aus dem Stand der Technik bekannten Verfahren.

In einer Ausführungsform des erfindungsgemäßen Verfahrens ist daher die zu destillierende organische Verbindung oder eine der zu destillierenden organischen Verbindungen mit der Absorptionsflüssigkeit identisch.

Das erfindungsgemäße Verfahren ist jedoch nicht auf die Destillation einer einzelnen organischen Verbindung beschränkt. Vielmehr erlaubt das erfindungsgemäße Verfahren auch die Destillation mehrerer organischer Verbindungen, von denen entweder nur eine Verbindung oder sogar sämtliche Verbindungen von der Absorptionsflüssigkeit verschieden sind. Erfindungsgemäß bildet eine von der Absorptionsflüssigkeit verschiedene zu destillierende organische Verbindung mit der Absorptionsflüssigkeit eine Additionsverbindung. Zweckmäßigerweise enthält eine zu destillierende organische Verbindung, die von der Absorptionsflüssigkeit verschieden ist, eine HO- oder SH-Gruppe. Denn Verbindungen mit einer HO- oder SH-Gruppe können in einer Michael-Additionsreaktion an eine Doppelbindung des Alkenylrests einer erfindungsgemäßen Absorptionsflüssigkeit addieren, insbesondere wenn es dabei um eine α,β-ungesättigte Carbonylverbindung handelt, oder unter Ausbildung eines Halbacetals oder eines Halbmercaptals an die Carbonylfunktion einer erfindungsgemäßen Absorptionsflüssigkeit addieren.

In einer weiteren Ausführungsform des erfindungsgemäßen Verfahrens ist eine der zu destillierenden organischen Verbindungen von der Absorptionsflüssigkeit verschieden und entspricht der allgemeinen Formel (II) R²-L¹-R³, wobei L¹ eine Alkyl-, Alkenyl- oder Alkinylgruppe mit 1 bis 12 Kohlenstoffatomen und R² und R³ jeweils unabhängig voneinander ein Wasserstoffatom, eine HO- oder eine HS-Gruppe bedeuten.

In einer bevorzugten Ausführungsform des erfindungsgemäßen Verfahrens ist eine der zu destillierenden organischen Verbindungen von der Absorptionsflüssigkeit verschieden und entspricht der allgemeinen Formel (II) R²-L¹-R³, wobei L¹ eine Alkylgruppe mit 1 bis 12 Kohlenstoffatomen und R² und R³ jeweils unabhängig voneinander ein Wasserstoffatom, eine HO- oder eine HS-Gruppe bedeuten.

Vorzugsweise handelt es sich bei L¹ um eine lineare Alkylgruppe mit 1 bis 6 Kohlenstoffatomen, bevorzugt mit 1 bis 4 Kohlenstoffatomen. Ferner ist bevorzugt einer der Reste R² und R³ ein Wasserstoffatom und der andere Rest eine HO- oder eine HS-Gruppe.

Im Rahmen des erfindungsgemäßen Verfahrens hat es sich als besonders vorteilhaft erwiesen, wenn die zu destillierende von der Absorptionsflüssigkeit verschiedene organische Verbindung eine HS-Gruppe beinhaltet. Denn organische Verbindungen mit HS-Gruppen bilden mit Aldehyden ein Halbmercaptal als Additionsverbindung. Durch die Verwendung der erfindungsgemäßen Absorptionsmitteln als Betriebsmittel in Vakuumeinrichtungen, wie beispielsweise Strahlpumpen, Flüssigkeitsringpumpen und Verdrängerpumpen, an Stelle von Wasser, wird daher sowohl eine Kontamination des Betriebsmittels mit einer schwefelhaltigen Verbindung als auch die aufwendige Entsorgung des kontaminierten Betriebsmittels vermieden.

In einer weiteren bevorzugten Ausführungsform des erfindungsgemäßen Verfahrens hat daher die zu destillierende von der Absorptionsflüssigkeit verschiedene organische Verbindung eine HS-Gruppe.

Im Rahmen der vorliegenden Erfindung hat sich außerdem gezeigt, dass durch die Verwendung von 3-Methylthiopropionaldehyd als Absorptionsflüssigkeit in der Vakuumdestillation der Gehalt von Methylmercaptan in der Gasphase drastisch reduziert werden kann. Dies wird darauf zurückgeführt, dass 3-Methylthiopropionaldehyd mit Methylmeraptan ein sogenanntes Halbmercaptal bildet. Dies sind semistabile chemische Verbindungen von Aldehyden mit Thiolen. Die Reaktion zu diesem Halbmercaptal findet sehr schnell in flüssiger Phase statt, so dass nahezu das gesamte Methylmercaptan aus der Gasphase in chemisch gebundener Form als Additionsverbindung in der flüssigen Phase absorbiert wird. Daher ist, wie in der nachfolgenden Tabelle gezeigt, der Dampfdruck von Methylmercaptan über einer Mischung aus 3-Methylthiopropionaldehyd und Methylmercaptan deutlich niedriger als über anderen flüssigen Phasen, wie beispielsweise über Mischungen aus Wasser und Methylmercaptan bzw. aus Methanol und Methylmercaptan. Über einer Lösung von 5,7 Gewichtsprozent Methylmercaptan in 3-Methylthiopropionaldehyd wird bei einer Temperatur von 20°C ein Dampfdruck von 14 mbar relativ zum Umgebungsdruck (1,014 bar) gemessen. Im Vergleich dazu beträgt bei derselben Temperatur der Dampfdruck über einer Lösung von lediglich 2,5 Gewichtsprozent Methylmercaptan in Methanol bereits 500 mbar relativ zum Umgebungsdruck (1,500 bara) und über einer Lösung von nur 1,2 Gewichtsprozent Methylmercaptan in Wasser sogar schon 700 mbar relativ zum Umgebungsdruck (1,700 bara).

Besonders bevorzugt handelt es bei der zu destillierenden von der Absorptionsflüssigkeit verschiedenen organischen Verbindung um Methylmercaptan.

**Tabelle 1: Dampfdrücke über Mischungen von Methylmercaptan (MC) in verschiedenen Lösungsmitteln (MMP = 3-Methylthiopropionaldehyd, H₂O = Wasser und MeOH = Methanol).**

| **Stoffgemisch** | **Anteil MC (Gew.-%)** | **Temperatur (K)** | **Dampfdruck (bara)** |
|---|---|---|---|
| MC in MMP | 5,7 | 289 | 1,014 |
| MC in H₂O | 1,2 | 293 | 1,700 |
| MC in MeOH | 2,5 | 289 | 1,500 |

Gemäß der erfindungsgemäßen Definition umfasst der Begriff Vakuumeinrichtung sowohl Vakuumpumpen als solche sowie auch Vakuumpumpen mit einer vorgeschalteten Vorrichtung, die eine erfindungsgemäße Absorptionsflüssigkeit zur chemischen und/oder physikalischen Absorption der zu destillierenden organischen Verbindungen enthält.

Hinsichtlich der Wahl der Pumpe ist das erfindungsgemäße Verfahren nicht auf einzelne Pumpentypen beschränkt. Vielmehr sind alle Pumpentypen als Vakuumeinrichtung einsetzbar, die einen für die Vakuumdestillation ausreichenden verminderten Druck erzeugen können. Vor allem sind für das erfindungsgemäße Verfahren alle Pumpentypen geeignet, die mit einem flüssigen Betriebs- oder Treibmittel arbeiten. Dies sind insbesondere Strahlpumpen, Verdrängerpumpen, Drehkolbengebläse bzw. Roots-Gebläse, Flüssigkeitsringpumpen, Drehschieber- und Sperrschieberpumpen. Darüber hinaus sind auch Verdrängerpumpen, die trocken laufen, also ohne ein flüssiges Betriebsmittel arbeiten bzw. nicht durch eine Flüssigkeit abgedichtet werden, sogenannte Trockenläufer, oder Molekular-, Turbomolekularpumpen, Kryopumpen und Sorptionspumpen im erfindungsgemäßen Verfahren einsetzbar, sofern diesen Pumpen eine Vorrichtung mit einer erfindungsgemäßen Absorptionsflüssigkeit zur chemischen und/oder physikalischen Absorption von destillierten organischen Verbindungen vorgeschaltet ist.

In einer Ausführungsform des erfindungsgemäßen Verfahrens ist daher die Vakuumeinrichtung eine Pumpe ausgewählt aus der Gruppe bestehend aus Strahlpumpen, Verdrängerpumpen, Drehkolbengebläsen, Flüssigkeitsringpumpen, Drehschieber- und Sperrschieberpumpen, Molekular-, Turbomolekularpumpen, Kryopumpen und Sorptionspumpen.

In einer bevorzugten Ausführungsform des erfindungsgemäßen Verfahrens ist der Verdrängerpumpe, sofern sie trocken läuft, der Molekular- oder Turbomolekularpumpe, Kryopumpe oder Sorptionspumpe eine Vorrichtung mit einer erfindungsgemäßen Absorptionsflüssigkeit vorgeschaltet. Vorzugsweise handelt es sich bei der vorgeschalteten eine erfindungsgemäße Absorptionsflüssigkeit enthaltenden Vorrichtung um einen Wäscher.

In einer Ausführungsform des erfindungsgemäßen Verfahrens ist die Vakuumeinrichtung eine Flüssigkeitsringpumpe, deren Ringflüssigkeit die erfindungsgemäße Absorptionsflüssigkeit enthält oder aus der erfindungsgemäßen Absorptionsflüssigkeit besteht.

Da Pumpen, insbesondere Flüssigkeitsringpumpen, Kondensationsstufen darstellen, wird die mindestens eine zu destillierende organische Verbindung nach der Destillation in der Pumpe kondensiert, was die physikalische und/oder chemische Absorption der organischen Verbindung in der Absorptionsflüssigkeit auf Grund des größeren für die Absorption zur Verfügung stehenden Volumens zunächst verbessert. Eine kontinuierliche physikalische und/oder chemische Absorption der zu destillierenden organischen Verbindung in der Absorptionsflüssigkeit führt letztlich zu einer Anreicherung der organischen Verbindung in der Absorptionsflüssigkeit. Eine zunehmende Anreicherung von absorbierten Verbindungen führt bei gekapselten Pumpen und insbesondere bei solchen Pumpen, die mit einer die Absorptionsflüssigkeit enthaltenden oder aus ihr bestehenden Flüssigkeit abgedichtet sind, zu einer Verringerung des für die Vakuumerzeugung zur Verfügung stehende Gasvolumens. Dies führt mittel- oder langfristig zur Beeinträchtigung der Leistungsfähigkeit der Pumpe. Zudem wirkt sich die Anreicherung einer chemisch absorbierten organischen Verbindung auch auf die weitere Absorptionsfähigkeit der betreffenden organischen Verbindung aus. Denn die Menge der chemisch absorbierbaren organischen Verbindung wird durch die anwesende Menge der Absorptionsflüssigkeit limitiert. Ferner ist zu berücksichtigen, dass die als Folge der chemischen Absorption gebildete Additionsverbindung in einer Gleichgewichtsreaktion gebildet wird. Auf welcher Seite sich das Gleichgewicht für die Bildung der Additionsverbindung befindet, hängt von der Gleichgewichtskonstante für die betreffende Reaktion und der Konzentration der im Gleichgewicht zueinander vorliegenden Komponenten ab. Bei einer im Vergleich zur Absorptionsflüssigkeit hohen Konzentration der Additionsverbindung, sind daher Rückreaktionen der Additionsverbindung in Richtung der organischen Verbindung und der Absorptionsflüssigkeit nicht auszuschließen.

Diesen Beeinträchtigungen kann entgegengewirkt werden, indem vor, während oder nach einer Vakuumdestillation in regelmäßigen Zeitabständen die Absorptionsflüssigkeit aus der Vakuumeinrichtung abgeführt und der Vakuumeinrichtung eine Absorptionsflüssigkeit, die keine der zu destillierenden organischen Verbindungen in physikalisch und/oder chemisch absorbierter Form enthält, zugeführt wird. Dieser Austausch von Absorptionsflüssigkeit, also die Abfuhr von Absorptionsflüssigkeit, die mit zumindest einer absorbierten organischen Verbindung belastet ist, aus der Vakuumeinrichtung heraus und die Zufuhr von frischer Absorptionsflüssigkeit, die noch nicht mit einer destillierten organischen Verbindung belastet ist, in die Vakuumeinrichtung, kann diskontinuierlich, kontinuierlich oder absatzweise kontinuierlich erfolgen. Unter einem absatzweise kontinuierlichen Austausch wird im Rahmen der vorliegenden Erfindung ein Austausch von Absorptionsflüssigkeit verstanden, der für einen bestimmten Zeitraum kontinuierlich erfolgt, und in unregelmäßigen Zeitintervallen unterbrochen wird.

Spätestens dann, wenn die Absorptionsfähigkeit der Absorptionsflüssigkeit erschöpft ist, sollte ein Austausch der alten bzw. belasteten Absorptionsflüssigkeit gegen eine neue Absorptionsflüssigkeit erfolgen. Als neue Absorptionsflüssigkeit wird in diesem Zusammenhang eine erfindungsgemäße Absorptionsflüssigkeit verstanden, die zumindest kein Addukt bzw. keine Additionsverbindung gemäß der vorliegenden Erfindung enthält. Bevorzugt enthält die neue Absorptionsflüssigkeit keine der zu destillierenden organischen Verbindungen in physikalisch und/oder chemisch absorbierter Form. Eine Erschöpfung der Absorptionsfähigkeit ist spätestens dann erreicht, wenn sich in der die Absorptionsvorrichtung verlassenden Flüssigphase eine Verbindung befindet, die eigentlich in der Absorptionsflüssigkeit chemisch absorbiert werden sollte. Das Vorliegen einer solchen Verbindung in der Flüssigphase ist durch geeignete Analysenmethoden wie IR, UV-Vis, NMR oder andere, geeignete Methoden nachweisbar bzw. bestimmbar. Ein kontinuierlicher Austausch der alten bzw. belasteten Absorptionsflüssigkeit gegen neue unbelastete Absorptionsflüssigkeit hat den Vorteil, dass die Vakuumdestillation zum Austausch der Absorptionsflüssigkeit nicht unterbrochen werden muss - wie es bei einem satzweisen Austausch der Absorptionsflüssigkeit der Fall wäre.

In einer Ausführungsform des erfindungsgemäßen Verfahrens wird daher die mit einer absorbierten organischen Verbindung angereicherte Absorptionsflüssigkeit diskontinuierlich, kontinuierlich oder absatzweise kontinuierlich aus der Vakuumeinrichtung abgeführt, und der Vakuumeinrichtung diskontinuierlich, kontinuierlich oder absatzweise kontinuierlich Absorptionsflüssigkeit zugeführt, die keine der zu destillierenden organischen Verbindungen in physikalisch und/oder chemisch absorbierter Form enthält.

Ein kontinuierlicher Austausch der mit einer destillierten organischen Verbindung belasteten Absorptionsflüssigkeit durch Absorptionsflüssigkeit, die keine der zu destillierenden organischen Verbindungen in physikalisch und/oder chemisch absorbierter Form enthält, hat den Vorteil, dass die Vakuumdestillation zum Austausch der Absorptionsflüssigkeit nicht unterbrochen werden muss - wie es bei einem diskontinuierlichen Austausch der Absorptionsflüssigkeit der Fall wäre.

Vorzugsweise erfolgt der Austausch daher kontinuierlich, um etwaige Beeinträchtigungen sowohl bezüglich der Absorption als auch bezüglich der Pumpenleistung grundsätzlich ausschließen zu können.

Ergänzend oder alternativ kann ein Austausch der mit einer destillierten organischen Verbindung belasteten Absorptionsflüssigkeit durch eine von der ersten Absorptionsflüssigkeit verschiedenen Absorptionsflüssigkeit auch erfolgen, wenn eine erste organische Verbindung vollständig aus einer Mischung durch Vakuumdestillation entfernt wurde, und im Anschluss eine weitere von der ersten Verbindung verschiedene organische Verbindung destilliert werden soll.

Durch Erniedrigen der Betriebstemperatur der Vakuumeinrichtungen und insbesondere ihrer als Betriebsmittel oder Ringflüssigkeit bzw. als Teil des Betriebsmittels oder der Ringflüssigkeit eingesetzten Absorptionsflüssigkeit wird die Effizienz der chemischen Absorption der zu destillierenden von der Absorptionsflüssigkeit verschiedenen organischen Verbindungen erhöht. Dies wird darauf zurückgeführt, dass eine Temperaturerniedrigung der Absorptionsflüssigkeit die Kondensation der abdestillierten organischen Verbindungen verbessert. Da die Bildung von Additionsverbindungen aus der erfindungsgemäßen Absorptionsflüssigkeit und einer erfindungsgemäß von der Absorptionsflüssigkeit verschiedenen zu destillierenden organischen Verbindung bevorzugt in der flüssigen Phase stattfindet, wird somit automatisch auch die chemische Absorption optimiert. Vorzugsweise wird daher im erfindungsgemäßen Verfahren die erfindungsgemäße Absorptionsflüssigkeit gekühlt.

Die Kühlung der Absorptionsflüssigkeit kann sowohl indirekt bzw. durch Konvektion, also durch Kühlung des betreffenden Pumpentyps, dem die Absorptionsflüssigkeit als Betriebsmittel zugeführt wird, als auch direkt, also durch Kühlung der Absorptionsflüssigkeit vor dem Eintritt in die Pumpe, erfolgen.

Vorzugsweise wird die Absorptionsflüssigkeit im Umlauf gekühlt. Im Rahmen des erfindungsgemäßen Verfahrens ist eine Umlaufkühlung insbesondere dann möglich, wenn eine Zufuhr und Abfuhr von Absorptionsflüssigkeit in die Pumpe bzw. aus der Pumpe in kontinuierlicher Weise erfolgt. Ein Umlauf einer erfindungsgemäßen Absorptionsflüssigkeit umfasst vorzugsweise die Abfuhr einer Absorptionsflüssigkeit mit einer in ihr physikalisch und/oder chemisch absorbierten organischen Verbindung aus der Pumpe, die Abtrennung der nicht absorbierten und/oder nicht kondensierten Verbindungen von der Absorptionsflüssigkeit in einem Phasenabscheider und die Rückführung der Absorptionsflüssigkeit in die Pumpe, gegebenenfalls begleitet von der Ergänzung zusätzlicher Absorptionsflüssigkeit, wenn die Menge der nach der Abtrennung der Additionsverbindung verbliebenen Absorptionsflüssigkeit die zum sachgemäßen Betrieb der Pumpe erforderliche Mindestmenge unterschreitet. In dem Phasenabscheider werden die nicht absorbierten und/oder nicht kondensierten Komponenten von der Absorptionsflüssigkeit abgetrennt. Die Komponenten, die die Additionsverbindung bilden, also insbesondere Methylmercaptan und 3-Methylthiopropionaldehyd, verbleiben in der Absorptionsflüssigkeit; andere nicht absorbierte Verbindungen verbleiben nicht in der Absorptionsflüssigkeit. Das Hemithioacetal ist zu stabil als dass es in einem Phasenabscheider wieder in seine Einzelbestandteile Methylmercaptan und 3-Methylthiopropionaldehyd zerlegt werden könnte. Die einfachste und beste Möglichkeit das Hemithioacetal zu zerlegen, besteht darin, es mit Acrolein unter Erhalt von 3-Methylthiopropionaldehyd umzusetzen. Die Umsetzung von einem 1 Mol Hemithioacetal mit 1 Mol Acrolein ergibt zwei Mol 3-Methylthiopropionaldehyd.

Bevorzugt wird zur Steigerung der Effizienz der chemischen Absorption die Temperatur der Absorptionsflüssigkeit auf 40 +/- 5°C bis 20 +/- 5°C abgekühlt.

Sofern eine der im erfindungsgemäßen Verfahren abdestillierten organischen Verbindungen mit der Absorptionsflüssigkeit identisch ist, wird durch physikalische Absorption dieser organischen Verbindung die Absorptionsflüssigkeit während der Durchführung des erfindungsgemäßen Verfahrens in der Vakuumeinrichtung angereichert. Gemäß einer bevorzugten Ausführungsform des erfindungsgemäßen Verfahrens sind die erfindungsgemäß eingesetzten Absorptionsflüssigkeiten Aldehyde mit einer HS- oder HO-Gruppe, vorzugsweise 3-Methylthiopropionaldehyd oder ein höheres Homologe davon. Solche Verbindungen stellen in der Regel wertvolle Synthesebausteine für die Herstellung von wirtschaftlich bedeutenden Produkten dar. Auch die Additionsverbindungen, die im erfindungsgemäßen Verfahren durch chemische Absorption einer von der Absorptionsflüssigkeit verschiedenen organischen Verbindung mit der Absorptionsflüssigkeit gebildet werden, stellen wertvolle Synthesebausteine für weitere Umsetzungen zu wirtschaftlichen bedeutenden Produkten dar. Insbesondere die durch Addition eines Alkylalkohols oder Alkylmercaptans an die Carbonylfunktion eines Aldehyds gebildeten Halbacetale oder Halbmercaptane sind wichtige Synthesebausteine. Denn diese in einer Gleichgewichtsreaktion gebildeten Additionsverbindungen können in Lösung erneut den Alkylalkohol bzw. das Alkylmercaptan freisetzen. Beispielsweise kann das aus 3-Methylthiopropionaldehyd und Methylmercaptan gebildete Halbmercaptal in Lösung Methylmercaptan wieder freisetzten. Das freigesetzte Methylmercaptan kann in einer separaten Reaktion mit Acrolein weiteres 3-Methylthiopropionaldehyd bilden, das ein wichtiger Synthesebaustein in der Herstellung des wirtschaftlich bedeutenden Produktes Methionin ist. Vorzugsweise ist daher die Absorptionsflüssigkeit 3-Methylthiopropionaldehyd und die von der Absorptionsflüssigkeit verschiedene organische zu destillierende Verbindung Methylmercaptan. Indem die aus der Vakuumeinrichtung abgeführte Absorptionsflüssigkeit einem chemischen Herstellungsverfahren zugeführt wird, kann die Ausbeute von den in dem betreffenden Herstellungsverfahren gebildeten Verbindungen gesteigert werden.

In einer Ausführungsform des erfindungsgemäßen Verfahrens wird daher die mit einer absorbierten organischen Verbindung angereicherte Absorptionsflüssigkeit aus der Vakuumeinrichtung abgeführt und einem chemischen Herstellungsverfahren zugeführt.

Handelt es sich bei der Absorptionsflüssigkeit um 3-Methylthiopropionaldehyd und bei der zu destillierenden von der Absorptionsflüssigkeit verschiedenen organischen Verbindung um Methylmercaptan, so wird die aus der Vakuumeinrichtung abgeführte Absorptionsflüssigkeit bevorzugt einem Verfahren zur Herstellung von 3-Methylthiopropionaldehyd aus Acrolein und Methylmercaptan zugeführt.

Im Rahmen der vorliegenden Erfindung hat sich außerdem gezeigt, dass die erfindungsgemäß als Bestandteil einer Ringflüssigkeit in Flüssigkeitsringpumpen eingesetzten Aldehyde auch schmierende Eigenschaften beim Betrieb der Flüssigkeitsringpumpen haben. Unabhängig von ihrer Eigenschaft als Absorptionsflüssigkeit für Aldehyde, Alkohole, und Thiole, können sie daher zusätzlich auch als Schmiermittel-Zusatz zu anderen Ringflüssigkeiten in Flüssigkeitsringpumpen eingesetzt werden.

Ein weiterer Gegenstand der vorliegenden Erfindung ist daher die Verwendung von Verbindungen der allgemeinen Formel (I) R¹-CHO als Schmiermittel in Flüssigkeitsringpumpen, wobei R¹ eine unsubstituierte oder eine mit einer H₃C-O- oder H₃C-S-Gruppe substituierte Alkyl-, Alkenyl- oder Alkinylgruppe mit 1 bis 12 Kohlenstoffatomen bedeutet.

Ein weiterer Gegenstand der vorliegenden Erfindung ist deshalb auch ein Verfahren zum Betrieb einer Flüssigkeitsringpumpe, umfassend den Schritt der Zugabe einer Verbindung der allgemeinen Formel (I) R¹-CHO als Schmiermittel zur Ringflüssigkeit der Flüssigkeitsringpumpe oder den Schritt des Befüllens einer Flüssigkeitsringpumpe mit einer Verbindung der allgemeinen Formel (I) R¹-CHO, wobei R¹ eine unsubstituierte oder eine mit einer H₃C-O- oder H₃C-S-Gruppe substituierte Alkyl-, Alkenyl- oder Alkinylgruppe mit 1 bis 12 Kohlenstoffatomen bedeutet.

Ein weiterer Gegentand ist zudem auch eine Flüssigkeitsringpumpe enthaltend eine Ringflüssigkeit, dadurch gekennzeichnet, dass die Ringflüssigkeit eine erfindungsgemäße Absorptionsflüssigkeit enthält oder aus ihr besteht.

In der erfindungsgemäßen Verwendung, dem erfindungsgemäßen Verfahren zum Betrieb einer Flüssigkeitsringpumpe sowie der erfindungsgemäßen Flüssigkeitsringpumpe bedeutet der Rest R¹ der Verbindung der allgemeinen Formel (I) vorzugsweise eine mit einer H₃C-O- oder H₃C-S-Gruppe substituierte Alkyl-, Alkenyl- oder Alkinylgruppe mit 1 bis 12 Kohlenstoffatomen, bevorzugt 1 bis 6 oder 2 bis 4 Kohlenstoffatomen. Ferner sind lineare gegenüber verzweigten Alkyl-, Alkenyl- oder Alkinylgruppen bevorzugt. Vorzugsweise handelt es sich bei dem Rest R¹ der Verbindung der allgemeinen Formel (I) um einen linearen mit einer H₃C-S-Gruppe substituierten Alkylrest mit 1 bis 12, bevorzugt 1 bis 6 oder 2 bis 4 Kohlenstoffatomen. Besonders bevorzugt ist der Aldehyd der allgemeinen Formel (I) 3-Methylthiopropionaldehyd oder ein höheres Homologe davon.

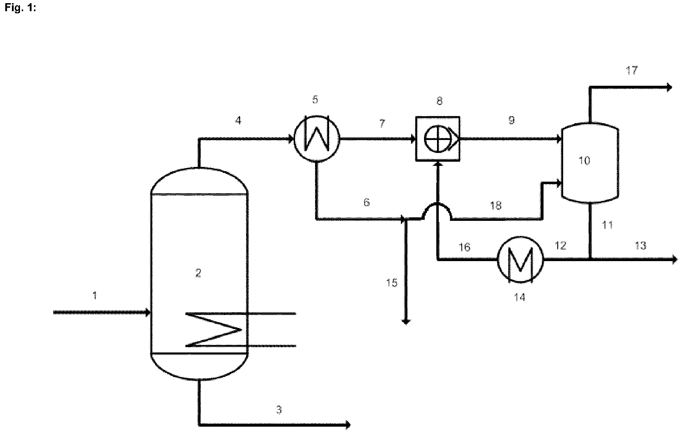

Fig. 1 zeigt eine Ausführungsform des erfindungsmäßen Verfahrens unter Verwendung einer Flüssigkeitsringpumpe: Durch eine Destillation bei vermindertem Druck werden die hochsiedenden Verunreinigungen aus einem der Produktion entstammenden 3-Methylthiopropionaldehyd enthaltenden Stoffstrom entfernt. Hierzu wird ein 3-Methylthiopropionaldehyd enthaltender Flüssigkeitsstrom aus der Produktion über die Leitung (1) in eine druckverminderte Destillationskolonne (2) eingeleitet. Der verminderte Druck in der Kolonne (2) wird mittels einer Flüssigkeitsringpumpe (8) erzeugt, die über die Leitungen (4) und (7) mit dem Kolonnenkopf verbunden ist. Die hochsiedenden Verunreinigungen werden aus dem Sumpf der Kolonne (2) über die Leitung (3) abgeführt. Das 3-Methylthiopropionaldehyd wird über den Kopf der Kolonne abgetrennt und über die Leitung (4) zum Wärmetauscher (5) geleitet, wo es kondensiert wird. Das derart erhaltene flüssige 3-Methylthiopropionaldehyd wird über die Leitungen (6) und (15) weiteren Verwendungen zugeführt. Auch wenn das 3-Methylthiopropionaldehyd dem Wärmetauscher (5) zugeführt wurde, gelangt dennoch immer noch eine Gasphase mit geringem Mengen an 3-Methylthiopropionaldehyd und Methylmercaptan sowie leicht siedenden Verunreinigungen aus der Herstellung des Aldehyds über die Leitung (7) in das Vakuumsystem. Sowohl das gasförmige 3-Methylthiopropionaldehyd als auch das gasförmige Methylmercaptan werden in der flüssigen 3-Methylthiopropionaldehyd enthaltenden Ringflüssigkeit der Flüssigkeitsringpumpe kondensiert und absorbiert. Das Methylmercaptan bildet mit 3-Methylthiopropionaldehyd das entsprechende Halbmercaptal. Über die Leitung (9) werden die Ringflüssigkeit und nicht kondensierbare bzw. nicht absorbierte Gase von der Flüssigkeitsringpumpe (8) zu einem Abscheider (10) geleitet. Ferner wird über die Leitungen (6) und (18) ein Teil des aufgereinigten 3-Methylthiopropionaldehyds vom Wärmetauscher (5), wo es auskondensiert wurde, in den Abscheider (10) eingeleitet. Die leichtsiedenden Verunreinigungen in der Dampfphase der Ringflüssigkeit, die dem Abscheider (10) zugeführt wurde, verbleiben in der Dampfphase und werden über die Leitung (17) abgeführt. Die 3-Methylthiopropionaldehyd und Halbmercaptal enthaltende Flüssigphase wird im Anschluss über die Leitungen (11) und (13) in das Verfahren zur Herstellung von 3-Methylthiopropionaldehyd zurückgeführt. Anteilig wird die 3-Methylthiopropionaldheyd enthaltende Flüssigphase der Flüssigkeitsringpumpe zurückgeführt. Vor Eintritt in die Flüssigkeitsringpumpe wird die als Ringflüssigkeit eingesetzte Flüssigphase mit Hilfe des Ringflüssigkeitskühlers (14) auf die gewünschte Temperatur abgekühlt.

Die vorliegende Erfindung wird in dem nachfolgenden Beispiel kurz vorgestellt.

### Beispiel:

3-Methylthiopropionaldehyd wurde in einem Reaktor aus Acrolein und Methylmercaptan hergestellt. Eine 3-Methylthiopropionaldehyd und Methylmercaptan enthaltender Flüssigstrom aus der Produktion des Aldehyds wurde in einer Anordnung, wie beispielsweise in Fig. 1 gezeigt, mit einer Flüssigkeitsringpumpe deren Ringflüssigkeit 3-Methylthiopropionaldehyd enthielt, einer Vakuumdestillation unterworfen. Vor ihrer Zufuhr in die Flüssigkeitsringpumpe wurde die Zusammensetzung der Ringflüssigkeit gaschromatographisch bestimmt. Für eine Dauer von einer Stunde wurde mit der diese Ringflüssigkeit enthaltenden Flüssigkeitsringpumpe eine 3-Methylthiopropionaldehyd und Methylmercaptan enthaltende Gasphase abgesaugt. Nach einer Stunde Betriebsdauer wurde die Ringflüssigkeit aus der Flüssigkeitsringpumpe abgeführt und ihre Zusammensetzung erneut gaschromatographisch bestimmt. Die Analysenergebnisse sind in der Tabelle 2 zusammengestellt. Die Angaben für die Massen in dieser Tabelle sind relativ. Als Referenz mit einem Wert von 100 Masseneinheiten wurde der Gehalt an 3-Methylthiopropionaldehyd in der Ringflüssigkeit gewählt. Das weiter oben erwähnte Halbmercaptal aus 3-Methylthiopropionaldehyd und Methylmercaptan ist thermisch instabil und wurde in der Gaschromatographie als Methylmercaptan nachgewiesen.

**Tabelle 2: Ergebnisse der gaschromatographischen Analyse einer Ringflüssigkeit.**

| **Komponente** | **Zusammensetzung der Ringflüssigkeit vor Zufuhr (relative Massen)** | **Zusammensetzung der Ringflüssigkeit nach Abfuhr (relative Massen)** |
|---|---|---|
| Methylmercaptan | 0,34 | 18,68 |
| Wasser | 2,35 | 8,81 |
| 3-Methylthiopropionaldehyd | 100 | 112,41 |

Ein Flüssigkeitsstrom von annähernd 104 relativen Masseneinheiten trat in die Flüssigkeitsringpumpe hinein, und anschließend verließ ein Flüssigkeitsstrom von annähernd 142 relativen Masseneinheiten die Flüssigkeitsringpumpe. Die Massendifferenz zwischen den beiden Flüssigkeitsströmen ergab sich fast vollständig durch die chemische und physikalische Absorption von 3-Methylthiopropionaldehyd und Methylmercaptan aus dem durch die Flüssigkeitsringpumpe abgesaugten Gasstrom. Dabei wurden innerhalb einer einstündigen Betriebsdauer annähernd 18,5 relative Masseneinheiten Methylmercaptan und annähernd 12,5 relative Masseneinheiten 3-Methylthiopropionaldehyd in der Ringflüssigkeit in physikalisch bzw. in chemisch absorbierter Form zurückgewonnen. Bei einer Last von 6500 relativen Masseneinheiten 3-Methylthiopropionaldehyd käme dies einem Verlust von annähernd 0,5 % gleich, was bei einem großtechnischen Verfahren wie der Herstellung von Methionin, für das 3-Methylthiopropionaldehyd eine essentielle Vorstufe ist, zu erheblichen Einbußen führen würde. Zudem wurden auch ca. 6,5 relative Masseneinheiten Wasser zurückgewonnen, die problemlos rückintegriert werden konnten und somit nicht entsorgt werden mussten.

## Patentansprüche

1. Verfahren zur Vakuumdestillation mindestens einer organischen Verbindung mittels einer eine Absorptionsflüssigkeit enthaltenden Vakuumeinrichtung, wobei die Absorptionsflüssigkeit von der zu destillierenden organischen Verbindung verschieden ist und mit ihr eine Additionsverbindung bildet und/oder die Absorptionsflüssigkeit mit der zu destillierenden organischen Verbindung identisch ist.

2. Verfahren gemäß Anspruch 1, wobei die Absorptionsflüssigkeit der allgemeinen Formel (I) R¹-CHO entspricht, wobei R¹ eine unsubstituierte oder eine mit einer H₃C-O- oder H₃C-S-Gruppe substituierte Alkyl-, Alkenyl- oder Alkinylgruppe mit 1 bis 12 Kohlenstoffatomen bedeutet.

3. Verfahren gemäß Anspruch 1 oder 2, wobei die Absorptionsflüssigkeit der allgemeinen Formel (I) R¹-CHO entspricht, wobei R¹ eine mit einer H₃C-O- oder H₃C-S-Gruppe substituierte Alkyl-, Alkenyl- oder Alkinylgruppe mit 1 bis 12 Kohlenstoffatomen bedeutet.

4. Verfahren gemäß einem beliebigen der Ansprüche 1 bis 3, wobei die Absorptionsflüssigkeit 3-Methylthiopropionaldehyd oder ein höheres Homologe davon ist.

5. Verfahren gemäß einem beliebigen der Ansprüche 1 bis 4, wobei die zu destillierende organische Verbindung oder eine der zu destillierenden organischen Verbindungen mit der Absorptionsflüssigkeit identisch ist.

6. Verfahren gemäß einem beliebigen der Ansprüche 1 bis 5, wobei eine der zu destillierenden organischen Verbindungen von der Absorptionsflüssigkeit verschieden ist und der allgemeinen Formel (II) R²-L¹-R³ entspricht, wobei L¹ eine Alkyl-, Alkenyl- oder Alkinylgruppe mit 1 bis 12 Kohlenstoffatomen und R² und R³ jeweils unabhängig voneinander ein Wasserstoffatom, eine HO- oder eine HS-Gruppe bedeuten.

7. Verfahren gemäß Anspruch 6, wobei eine der zu destillierenden organischen Verbindungen von der Absorptionsflüssigkeit verschieden ist und der allgemeinen Formel (II) R²-L¹-R³ entspricht, wobei L¹ eine Alkylgruppe mit 1 bis 12 Kohlenstoffatomen und R² und R³ jeweils unabhängig voneinander ein Wasserstoffatom, eine HO- oder eine HS-Gruppe bedeuten.

8. Verfahren gemäß Anspruch 6 oder 7, wobei die zu destillierende von der Absorptionsflüssigkeit verschiedene organische Verbindung eine HS-Gruppe hat.

9. Verfahren gemäß einem beliebigen der Ansprüche 1 bis 8, wobei die Vakuumeinrichtung eine Pumpe ausgewählt ist aus der Gruppe bestehend aus Strahlpumpen, Verdrängerpumpen, Drehkolbengebläsen, Flüssigkeitsringpumpen, Drehschieber- und Sperrschieberpumpen, Molekular-, Turbomolekularpumpen, Kryopumpen und Sorptionspumpen.

10. Verfahren gemäß Anspruch 9, wobei der Verdrängerpumpe, sofern sie trocken läuft, der Molekular- oder Turbomolekularpumpe, Kryopumpe oder Sorptionspumpe eine Vorrichtung mit einer Absorptionsflüssigkeit gemäß einem beliebigen der Ansprüche 1 bis 4 vorgeschaltet ist.

11. Verfahren gemäß Anspruch 9, wobei die Vakuumeinrichtung eine Flüssigkeitsringpumpe ist, deren Ringflüssigkeit eine Absorptionsflüssigkeit gemäß einem beliebigen der Ansprüche 1 bis 4 enthält oder aus einer Absorptionsflüssigkeit gemäß einem beliebigen der Ansprüche 1 bis 4 besteht.

12. Verfahren gemäß einem beliebigen der Ansprüche 1 bis 11, wobei die mit einer absorbierten organischen Verbindung angereicherte Absorptionsflüssigkeit diskontinuierlich, kontinuierlich oder absatzweise kontinuierlich aus der Vakuumeinrichtung abgeführt wird, und der Vakuumeinrichtung diskontinuierlich, kontinuierlich oder absatzweise kontinuierlich Absorptionsflüssigkeit zugeführt wird, die keine der zu destillierenden organischen Verbindungen in physikalisch und/oder chemisch absorbierter Form enthält.

13. Verfahren gemäß einem beliebigen der Ansprüche 1 bis 12, wobei die mit einer absorbierten organischen Verbindung angereicherte Absorptionsflüssigkeit aus der Vakuumeinrichtung abgeführt und einem chemischen Herstellungsverfahren zugeführt wird.

14. Verwendung von Verbindungen der allgemeinen Formel (I) R¹-CHO als Schmiermittel in Flüssigkeitsringpumpen, wobei R¹ eine unsubstituierte oder eine mit einer H₃C-O- oder H₃C-S-Gruppe substituierte Alkyl-, Alkenyl- oder Alkinylgruppe mit 1 bis 12 Kohlenstoffatomen bedeutet.

15. Flüssigkeitsringpumpe enthaltend eine Ringflüssigkeit, **dadurch gekennzeichnet, dass** die Ringflüssigkeit eine Absorptionsflüssigkeit gemäß einem beliebigen der Ansprüche 1 bis 4 enthält oder aus ihr besteht.
